Europäisches Patentamt

European Patent Office

Office européen des brevets

(19)

(11) EP 1 118 422 A2

(12) **EUROPEAN PATENT APPLICATION**

(43) Date of publication:
    25.07.2001 Bulletin 2001/30

(51) Int Cl.$^7$: **B23K 35/30**

(21) Application number: 01300057.5

(22) Date of filing: 04.01.2001

(84) Designated Contracting States:
    **AT BE CH CY DE DK ES FI FR GB GR IE IT LI LU MC NL PT SE TR**
    Designated Extension States:
    **AL LT LV MK RO SI**

(30) Priority: **11.01.2000 JP 2000006218**

(71) Applicants:
    • **JAPAN as represented by NATIONAL RESEARCH INSITUTE FOR METALS Ibaraki 300-26 (JP)**
    • **MITSUBISHI HEAVY INDUSTRIES, LTD. Tokyo 100 (JP)**

(72) Inventors:
    • **Ogawa, Makoto, National Research Instit.for Metals Ibaraki (JP)**
    • **Katada, Yasuyuki, National Resear. Inst.for Metals Ibaraki (JP)**
    • **Hiraoka, Kazuo, National Research Inst.for Metals Ibaraki (JP)**
    • **Uno, Hideki, National Research Inst.for Metals Tsukuba-shi Ibaraki (JP)**
    • **Shiga, Chiaki, National Research Inst.for Metals Ibaraki (JP)**

(74) Representative: **Hall, Matthew Benjamin Frank B. Dehn & Co. 179 Queen Victoria Street London EC4V 4EL (GB)**

(54) **Method of welding high nitrogen containing stainless steel and welding material therefor**

(57)    In a method of welding a high nitrogen containing stainless steel using, as a base metal, a high nitrogen stainless steel containing nitrogen at or above a solubility equilibrated with $N_2$ at 1 atm ($1.01 \times 10^5$ Pa) when melted, weld material is used having a high Cr, Mo content to maintain N in the weld metal, the resulting weld metal after the completion of welding being free from blow holes and having mechanical characteristics and corrosion resistance comparable with those of the base metal due to the maintenance of N in the weld metal.

Fig. 1

(a)

Cross sectional shape of groove before welding

(b)

Cross sectional shape of weld metal after welding

Shape of groove before welding

▨ Cross sectional area of weld metal $S_{WM}$

▩ Cross sectional area of base metal melted portion $S_{PM}$

EP 1 118 422 A2

Printed by Jouve, 75001 PARIS (FR)

**Description**

This invention concerns a method of welding a high nitrogen containing stainless steel and a welding material therefor.

More specifically, this invention concerns an improved novel method of welding high nitrogen containing stainless steel having excellent corrosion resistance and capable of preventing occurrence of blow holes in the weld portion and a welding material therefor.

As stainless steels with an aim of improving pitting corrosion resistance and crevice corrosion resistance against sea water circumstance, austenitic stainless steels containing more Cr and Mo compared with existent SUS 316L steels (Cr 20 - 30% by weight (hereinafter simply referred to as %), Mo 2 - 7%) and further containing 0.2 - 0.5%N have been put to practical use so far. It is generally known that the pitting corrosion resistance and the crevice corrosion resistance under sea water circumstance is expressed as PRE = %Cr + 3x%Mo + 10x%N as an index depending on the alloy composition (somewhat different values may be used depending on researchers for the coefficients to Mo and N). When PRE is 38 or more, they have sufficient corrosion resistance under sea water circumstance and those having PRE of 38 or more are referred to as super stainless steel. Generally, when a super stainless steel is welded, the corrosion resistance is sometimes deteriorated compared with that of the base metal e.g., from localized lowering of the concentration of alloy ingredients due to solidifying segregation, so that it has been attempted to use Ni-based alloys containing 20 - 25% of Cr and 10 - 20% of Mo for the welding material (welding consumables) as the countermeasure. However, such super stainless steels known so far containing much Cr and Mo and, involve a problem in view of resource exhaustion and cost.

In view of the foregoing situations, there has been proposed a high nitrogen stainless steel with increased content of nitrogen (N) as a resource saving stainless steel having pitting corrosion resistance and crevice corrosion resistance usable with no electric protection under sea water circumstance and capable of economizing main alloy elements of Cr, Ni and Mo. In the steel material, the N content is increased with an aim of improving the corrosion resistance. However, although such steel materials have the feature described above, since the N content is increased, supersaturated nitrogen is contained at or above a saturation solubility equilibrated with $N_2$ gas at 1 atm (1.01 x $10^5$ Pa) when it is heated, for example, to 1600°C into a molten state. Accordingly, when the steel material is welded by arc or laser, supersaturated N is gasified in the weld metal, solidified as it is and remains as blow holes as one of weld defects to bring about a problem that the mechanical characteristics of weld joints are degraded. Further, while N is an alloy element required for improving the corrosion resistance, the nitrogen concentration is lowered at the weld portion to deteriorate the corrosion resistance by formation of blow holes or release from the surface of the weld metal.

In view of the above, it would be desirable to provide a novel welding method, taking advantageous features of the high nitrogen containing stainless steel described above while overcoming the problems in the welding thereof, in which the weld metal composition is free from supersaturated state of N in a molten state, the average composition of the weld metal has sufficient corrosion resistance in the sea water circumstance and capable of maintaining mechanical characteristics and corrosion resistance comparable with those of the base metal.

For attaining the foregoing aim, this invention provides, at first, a method of welding a high nitrogen containing stainless steel using, as a base metal, a high nitrogen stainless steel containing nitrogen at or above a solubility equilibrated with $N_2$ at 1 atm (1.01 x $10^5$ Pa) when melted, wherein the method comprises conducting welding while setting a composition of a welding material (welding consumables) and a dilution rate to be defined later so as to satisfy the following two relations (A) and (B):

$$(A)$$

$$\%N^P \times D \leqq 0.028 \times (\%Cr^P \times D + \% Cr^F \times (1\text{-}D))$$

$$+0.014 (\%Mo^P \times D + \%Mo^F \times (1\text{-}D))$$

$$- 0.0060 \times (\%Ni^P \times D + \%Ni^F \times (1\text{-}D))$$

$$- 0.26$$

$$(B)$$

$$(\%Cr^P \times D + \%Cr^F (1\text{-}D)) + 3 \times (\%Mo^P \times D + \%Mo^F$$

$$\times (1\text{-}D)\,) + 8 \times \%N^P \times D \geqq 38$$

wherein the dilution rate D is defined as a ratio of a base metal melted portion cross sectional area to a weld metal cross sectional area on every one pass of welding, the concentrations of Cr, Ni, Mo and N (on the weight basis) of the base metal are defined as $\%Cr^P$, $\%Ni^P$, $\%Mo^P$ and $\%N^P$ and the concentrations of Cr, Ni and Mo (on the weight basis) of a welding material (welding consumables) are defined as $\%Cr^F$, $\%Ni^F$ and $\%Mo^F$.

Further, a preferred embodiment of this invention provides a method of welding a high nitrogen containing stainless steel described above wherein the composition of alloy elements of the welding material (welding consumables) comprises Cr 20 - 32%, Ni 5 - 25%, Mo 2 - 8%, C ≤ 0.03%, Si ≤ 0.6%, Mn ≤ 2.5%, P ≤ 0.03%, S ≤ 0.03% and the balance of Fe in which other inevitable impurities may also be contained.

This invention also provides a welding material in the welding method described above.

Preferred embodiments of this invention having the foregoing features are to be described below.

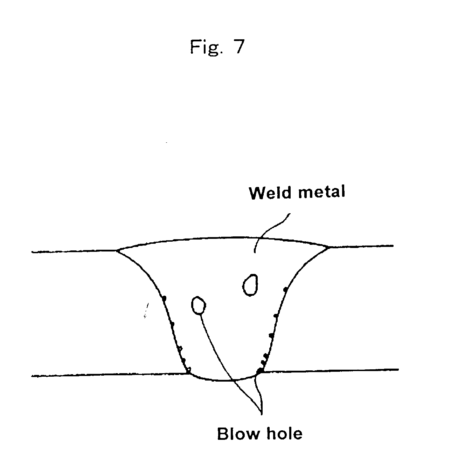

At first, the high nitrogen containing stainless steel of the base metal as a material used for the welding method of this invention exhibits excellent corrosion resistance equivalent to or superior to that of known super stainless steels and enables to reduce the cost and save resources by economization for Cr, Ni and Mo by increasing the N content to about 1%, with Cr, Ni, Mo contents being at an identical level with that of existent type 316 stainless steels, by taking note that N is an alloy element contributing to the improvement of corrosion resistance instead of Cr and Mo and has a function of stabilizing the austenitic phase. However, since the material, in a molten state, contains N at or above a solubility equilibrated with an $N_2$ gas at 1 atm ($1.01 \times 10^5$ Pa) (hereinafter simply referred to as supersaturated), when a base metal is melted by usual welding, supersaturated N is gasified to form blow holes in a weld metal as shown in Fig. 7 to bring about a problem of deteriorating mechanical characteristics of welded joints. Further, while N is an essential alloy element for obtaining high corrosion resistance, the nitrogen concentration in the weld metal after the completion of welding is remarkably lowered compared with the concentration in the base metal to deteriorate the corrosion resistance. This is because of dilution with the added welding material, formation of blow holes and release from the surface of the molten metal into atmospheric air during melting.

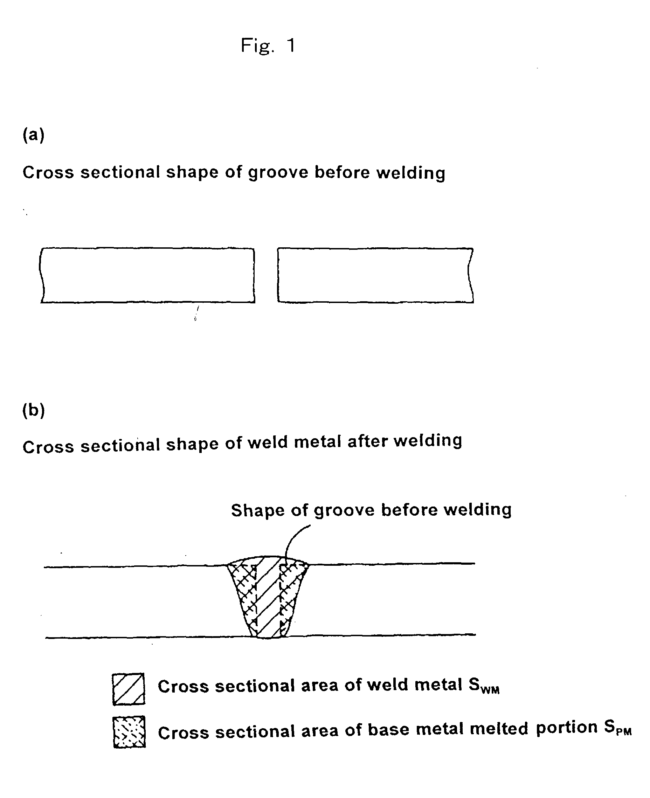

This invention provides a method capable of preventing formation of blow holes and degradation of corrosion resistance in the welding of high N stainless steels having the foregoing characteristics. Then, this invention has been achieved based on the finding that blow holes due to supersaturated N are formed when only the base metal is melted autogenously in welding, whereas a portion of the base metal is melted while supplying the welding material (welding consumables), the molten base metal and the welding material are mixed rapidly and blow holes are not formed unless the mixed molten metal composition reaches N supersaturation. For keeping the molten metal from N supersaturation, this invention has a feature of conducting welding while supplying a sufficient amount of welding material by decreasing the volume of a base metal molten portion and defining a volume ratio of the base metal melted portion to the volume of an entire molten metal including the welding material on every one path of welding (the value is defined as a dilution rate) within a certain range in welding. However, in a case where a cross sectional shape of a groove and a cross sectional shape of a weld metal are constant along the welding direction as in ordinary welding, the dilution rate defined herein is represented, for example, in the change from the state of the cross sectional shape of groove before welding exemplified in Fig. 1(a) to the state of the cross sectional shape of a weld metal after welding as a ratio of a cross sectional area (Spm) of the base metal melted portion to a cross sectional area ($S_{WM}$) of the weld metal, that is, by the following equation as a rule:

$$\text{Dilution rate } D = S_{PM} / S_{WM}.$$

Further, increase of the solubility of N in the molten state of the welding material is important for widening the defined range of the dilution ratio but it has been found that the material based on Fe and increased with Cr and Mo content can dissolve nitrogen greatest among practical materials and is suitable as the welding material for high N stainless steel. In view of the above, it is suitable in this invention to conduct welding by using high Cr, Mo containing Fe based alloy material as the welding material (welding consumables) in order to prevent formation of blow holes in the welding of high N stainless steel under the condition that the dilution rate is a predetermined value or less.

On the other hand, pitting corrosion resistance and crevice corrosion resistance to sea water can be arranged according to the following relation with respect to the material composition:

Pitting corrosion resistance and crevice corrosion

$$resistance \propto PRE \ ( = \%Cr + 3 \times \%Mo + 10\%N \ ).$$

Nitrogen is an element contributing greatly to corrosion resistance but, in the welding of high N stainless steel , the nitrogen concentration in the weld metal lowers to an equilibrated solubility or less with an $N_2$ gas at 1 a tm (1.01 x $10^5$ Pa) upon melting. In view of the above, it is necessary to take a consideration that PRE described above is 38 or more even when the N concentration is lowered in the welded metal composition mixed with the molten base metal by making the welding material (welding consumables) composition of high Cr, Mo content. Further, since other elements, Mn, Si, Al, C, O, P and S give undesired effects on the corrosion resistance, it is necessary that they are limited to an amount at the level defined in accordance with type 316L stainless steel or less and not added positively.

As has been described above, it is necessary for the method of welding a high nitrogen austenitic stainless steel to use a stainless steel containing much amount of Cr and Mo for the welding material (welding consumables) and specify the dilution rate within a certain range and set PRE of weld metal composition to 38 or more, for preventing occurrence of blow holes and prevent degradation of the corrosion resistance of the weld metal. In this invention, for attaining such conditions, the dilution rate and the composition of the welding material (welding consumables) are defined as follows:

(A)

$$\%N^P \times D \leqq 0.028 \times (\%Cr^P \times D + \%Cr^F \times (1\text{-}D) )$$

$$+ 0.014 \ (\%Mo^P \times D + \%Mo^F \ x \ (1\text{-}D) )$$

$$- 0.0060 \times (\%Ni^P \times D + \%Ni^F \times (1\text{-}D) )$$

$$- 0. \ 26$$

(B)

$$(\%Cr^P \times D + \%Cr^F \ (1\text{-}D) ) + 3 \times (\%Mo^P \times D + \%Mo^F$$

$$x \ (1\text{-}D) ) + 8 \times \%N^P \times D \geqq 38$$

The concentrations of Cr, Ni, Mo and N of the base metal (on the weight basis) are defined as $\%Cr^P$, $\%Ni^P$, $\%HO^P$ and $\%N^P$ and the concentrations of Cr, Ni and Mo of a weld material (on the weight basis) are defined as $\%Cr^F$, $\%Ni^F$ and $\%Ho^F$. Further, the dilution ratio is defined as D. The unit for the concentration is on the weight percent basis .

In preferred embodiments, the welding material is a stainless steel containing Cr, Mo, Ni, Mn, Si, C, P, S, O, Al and other inevitable impurities and the range for the composition is preferably defined as: Cr 20 - 32% by weight (hereinafter referred to as %), Mo 2 - 10%, Ni 5 - 25%, Mn, Si, C, P, S, O, Al are the prescribed values in type 316L stainless steel or less. The compositional definition is directed only to Cr, Ni, Mo and N contained in the base metal and Cr, Ni, Mo contained in the welding material (welding consumables), while other elements are substantially negligible since their amount is small to give less effects.

Referring more specifically, the saturation solubility of N equilibrated with N2 at 1 atm (1.01 x $10^5$ Pa) in an Fe-based alloy in a molten state can be defined, for example, according to calculation equations for recommended values of the Japan Society for the Promotion of Science but an approximate equation may also be used for Fe-based alloys in the compositional concerned here. The condition that the molten metal does not reach N supersaturation in a molten state is defined by the equation (A) above.

Then, PRE of 38 or more of the molten metal is defined by the equation (B) above. This is based on the result of an experiment that about 20% of nitrogen in the weld metal is released into atmospheric air upon melting.

In accordance with the two equations (A) and (B) above, the dilution rate upon welding and the range for the composition of the welding material (welding consumables) are defined based on the composition of the base metal in this invention. This enables stainless steels of high nitrogen content to be welded with no formation of blow holes and without degradation of the corrosion resistance of the base metal.

The concept for the welding of incorporating excessive nitrogen in the base metal and absorbing the same in the welding material (welding consumables) is novel and not known so far.

Certain preferred embodiments of the present invention will now be described by way of example only and with reference to the accompanying drawings, in which:

Fig. 1 (a) , (b) is an explanatory view for the dilution rate in this invention;
Fig. 2 is a view illustrating a GTA welding process conducted under supply of welding material;
Fig. 3(a), (b) is a cross sectional view showing the shape of a groove and a weld bead cross section as an example;
Fig. 4 is a cross sectional view illustrating another shape of groove as an example;
Fig. 5 is a perspective view illustrating laser welding as an example;
Fig. 6 (a), (b) is a view showing an GMA welding process and a cross sectional shape for the groove; and
Fig. 7 is an explanatory cross sectional view for the formation of blow holes.

EXAMPLE

Example 1

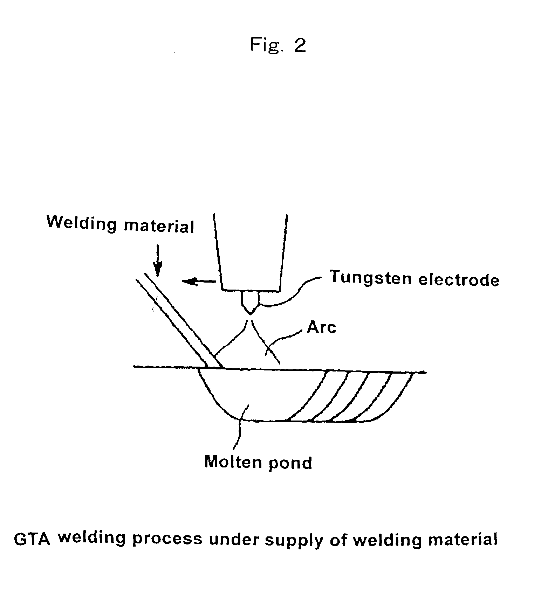

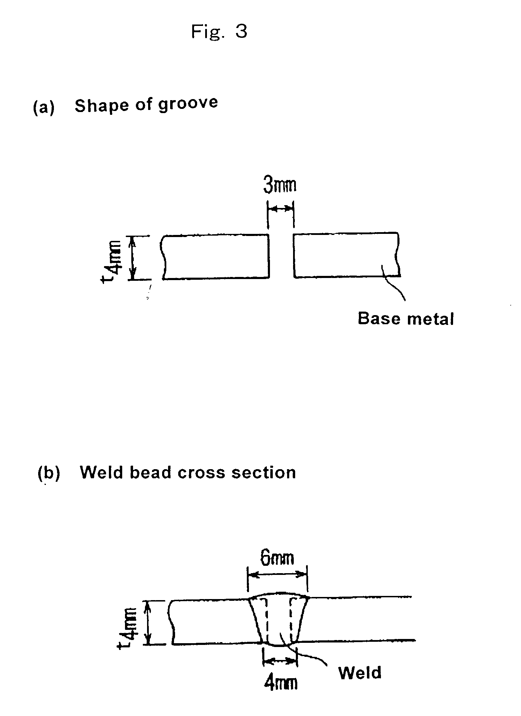

A material of an alloy composition corresponding to type 316L stainless steel and containing 1.0% of N was prepared as the base metal by a pressure type electro slag remelting (hereinafter pressure ESR), and hot rolled into a plate of 4 mm thickness. As a result of previously conducting butt welding in an experimental manner using a commercially available welding material by a GTA arc welding shown in Fig. 2 with a groove shape shown in Fig. 3(a) under the welding conditions at an arc current of 130A, and an arc voltage of 12 V, a welding speed of 10 cm/min, with a welding material diameter of 1.2 mm and at a sealed gas flow rate of Ar 15 1/min, a dilution rate of 40% was obtained with the groove shape and under the welding conditions. As the composition for the welding material capable of satisfying the definition equations (A) and (B) of this invention in a case of welding at 40% dilution rate, those marked with "*" in Table 1 can be mentioned. In this case, the composition shown by E-1 in Table 1 was vacuum melted, and drawn into a rod-like welding material of 1.2 mm diameter. Two sheets of base metal plates were cut out each into a size of 50 x 100 x 4mm, abutted against each other with fabrication of a groove shape shown in Fig. 3 (a) and were welded in flat position under the welding conditions described above. Fig. 3(b) shows the result of observation for the weld bead cross section, in which the dilution rate calculated from the metal cross sectional area in the weld zone and the cross sectional area of the base metal molten portion was 40%. As a result of observation for five positions at optional cross sections cut out from the weld bead, no blow holes were observed at all. Further, the portion of weld metal was cut out and the pitting corrosion potential in artificial sea water was measured. As a result, occurrence of pitting corrosion was not observed at 45°C. Formation of blow holes can be prevented completely and the corrosion resistance of the weld metal was excellent being comparable with that of the base metal according to the welding method of this invention.

[Table 1]

| Base metal composition (wt%) | Cr 18 | Ni 14 | Mo 2.5 | N 1 | Dilu-tion rate | Weld metal composition (wt%) (simple calculation value) | | | | N solubility | PRE |
|---|---|---|---|---|---|---|---|---|---|---|---|
| Welding material composition (wt%) | Cr | Ni | Mo | N | | Cr | Ni | Mo | N | | |
| | 32 | 30 | 5 | 0 | 0.4 | 26.4 | 23.6 | 4 | 0.4 | 0.39 | 41.6 |
| * | 32 | 29 | 5 | 0 | | 26.4 | 23 | 4 | 0.4 | 0.40 | 41.6 |
| * | 32 | 16 | 4 | 0 | | 26.4 | 15.2 | 3.4 | 0.4 | 0.44 | 39.8 |
| * | 32 | 10 | 4 | 0 | | 26.4 | 11.6 | 3.4 | 0.4 | 0.46 | 39.8 |
| * | 32 | 9 | 3 | 0 | | 26.4 | 11 | 2.8 | 0.4 | 0.45 | 38 |
| | 30 | 21 | 5 | 0 | | 25.2 | 18.2 | 4 | 0.4 | 0.39 | 40.4 |
| * | 30 | 20 | 5 | - | | 25.2 | 17.6 | 4 | 0.4 | 0.40 | 40.4 |
| * | 30 | 14 | 5 | 0 | | 25.2 | 14 | 4 | 0.4 | 0.42 | 40.4 |
| * | 30 | 9 | 4 | 0 | | 25.2 | 11 | 3.4 | 0.4 | 0.43 | 38.6 |
| * | 29 | 8 | 4 | 0 | | 24.6 | 10.4 | 3.4 | 0.4 | 0.41 | 38 |
| *E-1 | 28 | 10 | 5 | 0 | | 24 | 11.6 | 4 | 0.4 | 0.40 | 39.2 |
| | 27 | 19 | 6 | 0 | | 23.4 | 17 | 4.6 | 0.4 | 0.36 | 40.4 |
| | 27 | 18 | 6 | 0 | | 23.4 | 16.4 | 4.6 | 0.4 | 0.36 | 40.4 |
| * | 27 | 13 | 6 | 0 | | 23.4 | 13.4 | 4.6 | 0.4 | 0.38 | 40.4 |
| *E-4 | 27 | 7 | 6 | 0 | | 23.4 | 9.8 | 4.6 | 0.4 | 0.40 | 40.4 |
| | 27 | 5 | 5 | 0 | | 23.4 | 8.6 | 4 | 0.4 | 0.40 | 38.6 |
| | 24 | 7 | 7 | 0 | | 21.6 | 9.8 | 5.2 | 0.4 | 0.36 | 40.4 |
| | 24 | 6 | 7 | 0 | | 21.6 | 9.2 | 5.2 | 0.4 | 0.36 | 40.4 |
| R-1 | 22 | 26 | 5 | 0 | | 20.4 | 21.2 | 4 | 0.4 | 0.24 | 35.6 |

*Composition satisfying two equations

EP 1 118 422 A2

Comparative Example 1

Identical GTA welding was conducted using the base metal and the welding material of identical compositions with those in Example 1 under the conditions an at arc current of 150A and a welding speed of 10 cm/min, at a dilution ratio of 70% and evaluation was conducted in the same manner. The definition equations (A) and (B) were not satisfied, formation of blow holes were observed in the weld zone and the pitting corrosion potential in artificial sea water at 45°C was 0.7 V and the corrosion resistance was also degraded.

Comparative Example 2

A test was conducted under the same welding conditions by using a base metal of the identical composition with that in Example 1 and using a commercially available (welding consumables as an N-based material (Name of product: 625) of 1.2 mm diameter and excellent in corrosion resistance. As a result, although the corrosion resistance was excellent in the weld metal portion, blow holes were formed. This is considered to be attributable to that the definition equation (A) is not satisfied and solubility of N in the Ni-based alloy is low upon melting.
Results of Example 1, Comparative Examples 1 and 2 are collectively shown in Table 2.

[Table 2]

| Base metal main composition (wt%) | Welding material main alloy composition (wt%) | GTAW arc current / welding speed (A/(cm/min)) | Dilution rate (%) | Blow hole | Pitting corrosion potential $(V_{SCE})$ | Remarks |
|---|---|---|---|---|---|---|
| 18Cr·14Ni·2.5Mo·1N ·Fe balance | - | - | - | - | > 0.9 | Base metal performance |
| | 28Cr·10Ni·5Mo ·Fe balance | 130/10 | 40 | None | > 0.9 | Example 1 |
| | 28Cr·10Ni·5Mo ·Fe balance | 150/10 | 70 | Presence | 0.7 | Comp.Example 1 |
| | 22Cr·9Mo·3.5(Nb+Ta) ·Ni balance | 100/10 | 40 | Presence | > 0.9 | Comp.Example 1 |

Example 2

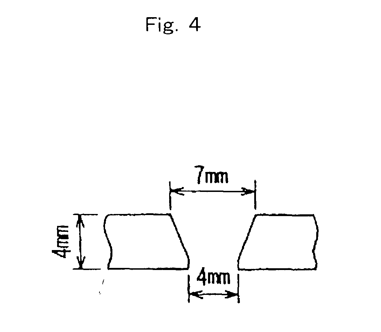

Investigation was made under the different condition for N content in the base metal and the dilution rate. A base metal plate metal of 4 mm thickness was prepared in the same manner as in Example 1 in which the base metal was also based on type 316L stainless steel and contained 0.5% N. In this example, GTA welding was conducted under the condition of providing 10% dilution rate. As the composition of the welding material capable of satisfying the definition equations (A) and (B) under the conditions, those marked with "*" in Table 3 may be considered. Among them, the material of the composition shown by E-2 was vacuum melted and drawn into a wire of 1.2 mm diameter. Welding with the groove shape shown in Fig. 4 was conducted under the conditions at an arc current of 140A and a welding speed of 10 cm/min. As a result of observing the weld bead cross section, the dilution rate was 10%. Table 4 shows the results of evaluation for the presence or absence of blow holes in the weld metal, and pitting corrosion potential in artificial sea water at 45°C. There were no blow holes and the corrosion resistance was also favorable.

Comparative Example 3

A welding test was conducted using a base metal and a welding material both identical with those in Example 2 under the welding conditions at an arc current of 140 A and a welding speed of 7 cm/min. Table 4 shows the result in which the dilution rate was increased and the corrosion resistance was deteriorated.

[Table 3]

| Base material composition (wt%) | Cr | Ni | Mo | N | Dilution rate | Weld metal composition (wt%) (simple calculation value) | | | | N solubility | PRE |
|---|---|---|---|---|---|---|---|---|---|---|---|
| | 18 | 14 | 2.5 | 0.5 | | Cr | Ni | Mo | N | | |
| Welding material composition (wt%) | Cr | Ni | Mo | N | 0.1 | | | | | | |
| * | 30 | 24 | 3 | 0 | | 28.8 | 23 | 2.95 | 0.05 | 0.45 | 38.05 |
| * | 30 | 21 | 3 | 0 | | 28.8 | 20.3 | 2.95 | 0.05 | 0.47 | 38.05 |
| * | 30 | 17 | 3 | 0 | | 28.8 | 16.7 | 2.95 | 0.05 | 0.49 | 38.05 |
| * | 27 | 23 | 4 | 0 | | 26.1 | 22.1 | 3.85 | 0.05 | 0.39 | 38.05 |
| * | 27 | 16 | 4 | 0 | | 26.1 | 15.8 | 3.85 | 0.05 | 0.43 | 38.05 |
| * | 24 | 22 | 5 | 0 | | 23.4 | 21.2 | 4.75 | 0.05 | 0.33 | 38.05 |
| *E-2 | 24 | 15 | 5 | 0 | | 23.4 | 14.9 | 4.75 | 0.05 | 0.37 | 38.05 |

*  Composition satisfying two equations

[Table 4]

| Base metal main composition (wt%) | Welding material main alloy composition (wt%) | GTAW arc current /welding speed (A/(cm/min)) | Dilution rate (%) | Blow hole | Pitting corrosion potential ($V_{SCE}$) | Remarks |
|---|---|---|---|---|---|---|
| 18Cr·14Ni·2.5 Mo· 0.5N·Fe balance | - | - | - | | > 0.9 | Base metal performance |
| | 24Cr·15Ni·5Mo ·Fe balance | 140/10 | 10 | None | > 0.9 | Example 2 |
| | | 140/7 | 25 | None | 0.8 | Comp.Example 3 |

Example 3

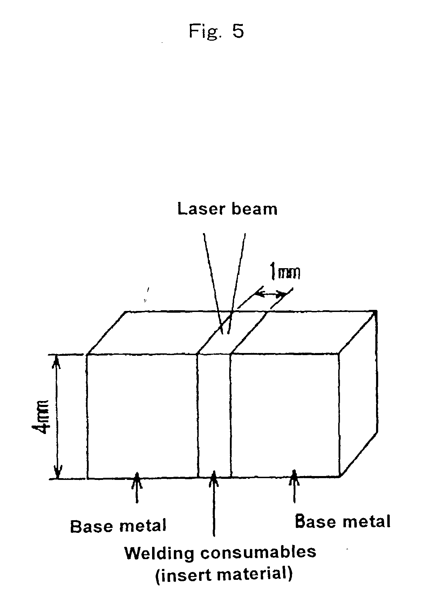

$CO_2$ laser welding was conducted using a base metal of a composition comprising 23Cr-2Mo-1.5N-Fe (balance). The base metal was prepared in the same manner as in Example 1 and fabricated into 4 mm thickness. As shown in Fig. 5, an insert metal of 1 mm x 4 mm rectangular cross section was put between base metals each of 4 mm thickness as a specimen and conditions were selected such that the dilution rate was 30%. Compositions of the insert metal material include those of the compositions marked with "*" in Table 5. Among them, the material of the composition shown by E-3 was vacuum melted and rolled, cut out into the cross sectional shape described above and put as an insert metal between base metals. The welding conditions were at a $CO_2$ laser power of 5 kW and a welding speed of 2 m/min . The results are shown in Table 6. A weld metal with no blow holes and of excellent corrosion resistance was obtained.

[Table 5]

| Base material composition (wt%) | Cr | Ni | Mo | N | Dilu-tion rate | Weld metal composition (wt%) (simple calculation value) | | | | N solubi-lity | PRE |
|---|---|---|---|---|---|---|---|---|---|---|---|
| | 23 | 0 | 2 | 1.5 | | | | | | | |
| Welding material composition (wt%) | Cr | Ni | Mo | N | 0.3 | Cr | Ni | Mo | N | | |
| * | 30 | 25 | 3 | 0 | | 27.9 | 18.2 | 2.7 | 0.45 | 0.45 | 39.6 |
| * | 30 | 25 | 3 | 0 | | 27.9 | 17.5 | 2.7 | 0.45 | 0.45 | 39.6 |
| * | 30 | 21 | 3 | 0 | | 27.9 | 14.7 | 2.7 | 0.45 | 0.47 | 39.6 |
| * | 30 | 16 | 3 | 0 | | 27.9 | 11.2 | 2.7 | 0.45 | 0.49 | 39.6 |
| * | 30 | 15 | 3 | 0 | | 27.9 | 10.5 | 2.7 | 0.45 | 0.50 | 39.6 |
| | 28 | 25 | 3 | 0 | | 26.5 | 17.5 | 2.7 | 0.45 | 0.41 | 38.2 |
| | 28 | 20 | 3 | 0 | | 26.5 | 14 | 2.7 | 0.45 | 0.44 | 38.2 |
| | 28 | 16 | 3 | 0 | | 26.5 | 11.2 | 2.7 | 0.45 | 0.45 | 38.2 |
| *E-3 | 28 | 15 | 3 | 0 | | 26.5 | 10.5 | 2.7 | 0.45 | 0.46 | 38.2 |
| | 26 | 15 | 4 | 0 | | 25.1 | 10.5 | 3.4 | 0.45 | 0.43 | 38.9 |
| * | 26 | 10 | 4 | 0 | | 25.1 | 7 | 3.4 | 0.45 | 0.45 | 38.9 |

* Composition satisfying two equations

[Table 6]

| Base metal main composition (wt%) | Insert metal main composition (wt%) | $CO_2$ laser power /welding speed (kW/(cm/min)) | Dilution rate (%) | Blow hole Presence or Absence | Pit corrosion potential ($V_{SSC}$) | Remarks |
|---|---|---|---|---|---|---|
| 23Cr·2Mo·1.6N ·Fe balance | - | - | - | - | > 0.9 | Base metal performance |
| | 28Cr·15Ni·3Mo ·Fe balance | 5/200 | 30 | None | > 0.9 | Example 3 |

EP 1 118 422 A2

Example 4

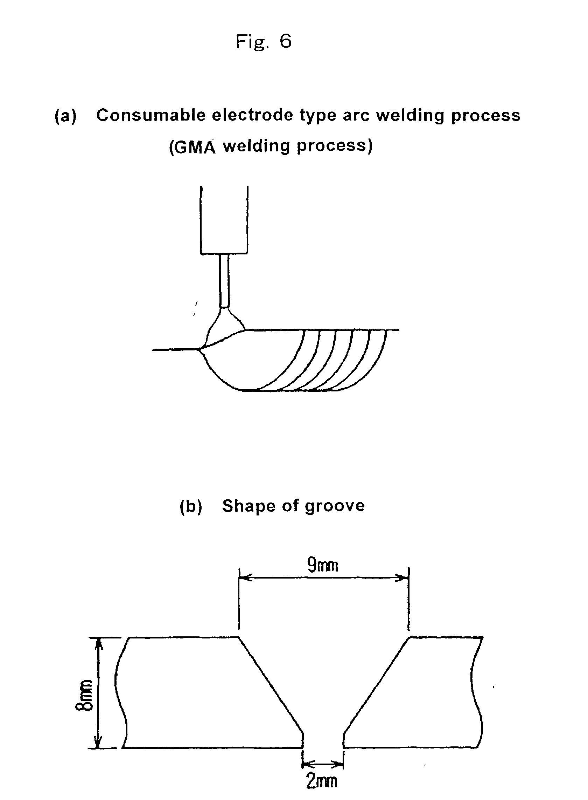

Then, an example of conducting GMA welding shown in Fig. 6 using the base material of the identical conditions with that in Example 1 is shown. The base metal is formed by preparing an ingot by pressure ESR and then rolled into a plate material of 8 mm thickness. The base metals were fabricated with the groove shape shown in Fig. 6 (b) abutted against each other and, as a result of investigation for the welding conditions by using a marketed welding wire of 1.6 mm diameter, 40% dilution ratio was obtained under the conditions at an arc current of 300 A, an arc voltage of 30 V, a welding speed of 40 cm/min and a sealed gas flow rate of 20 1/min. Then, the welding material of the compositions shown by E-4 in Table 1 was vacuum melted and drawn into a wire of 1.6 mm diameter and GMA welded under the same conditions. The dilution rate was 40% in view of the shape of the weld bead cross section. As a result of observation for the weld bead cross section at optional five positions, no blow holes were observed.
Further, when the weld metal portion was cut out and measured for the pitting corrosion potential in artificial sea water at 45°C, no pitting corrosion was formed.

Comparative Example 4

GMA welding was conducted in the same manner as in Example 4. The welding material of the composition shown by R-1 in Table 1 was vacuum melted with identical composition of the base metal, plate thickness, groove shape and under welding conditions, drawn and used as a wire of 1.6 mm diameter. As a result, formation of blow holes and degradation of corrosion resistance of the weld metal were observed. Table 7 collectively shows the results of Example 4 and Comparative Example 4.

[Table 7]

| Base metal main composition (wt%) | Welding material main composition (wt%) | GMAW arc current /welding speed (A/(cm/min)) | Dilution rate (%) | Blow hole Presence or Absence | Pitting corrosion potential ($V_{SSC}$) | Remarks |
|---|---|---|---|---|---|---|
| 18Cr·14Ni·2.5Mo·1.0N ·Fe balance | − | − | − | − | > 0.9 | Base metal performance |
| | 27Cr·5Ni·5Mo ·Fe balance | 300/40 | 40 | None | > 0.9 | Example 4 |
| | 22Cr·26Ni·5Mo ·Fe balance | 300/40 | 40 | Present | 0.8 | Comp.Example 4 |

EP 1 118 422 A2

As has been described above specifically, this invention enables welding of high nitrogen stainless steel of excellent corrosion resistance and capable of preventing formation of blow holes in the weld metal. Application to ocean structures and equipments for sea water circumstances can be expected. The steel material requires neither sacrificial protection nor electric protection, can economize Cr, Mo and Ni as the main alloy elements, can reduce the cost, as well as economize source and energy.

**Claims**

1.  A method of welding a high nitrogen containing stainless steel using, as a base metal, a high nitrogen stainless steel containing nitrogen at or above a solubility equilibrated with $N_2$ at 1 atm ($1.01 \times 10^5$Pa) when melted, wherein welding is conducted while setting a composition of a welding material (welding consumables) and a dilution rate to be defined latter so as to satisfy the following two relations (A) and (B):

$$(A)$$

$$\%N^P \times D \leqq 0.028 \times (\%Cr^P \times D + \%Cr^F \times (1\text{-}D))$$

$$+ 0.014 (\%Mo^P \times D + \%Mo^F \times (1\text{-}D))$$

$$- 0.0060 \times (\%Ni^P \times D + \%Ni^F \times (1\text{-}D))$$

$$- 0.26$$

$$(B)$$

$$(\%Cr^P \times D + \%Cr^F (1\text{-}D)) + 3 \times (\%Mo^P \times D + \%Mo^F$$

$$\times (1\text{-}D)) + 8 \times \%N^P \times D \geqq 38$$

wherein the dilution rate D is defined as a ratio of a cross sectional area of a base metal melted portion to a cross sectional area of a weld metal on every one pass of welding, the concentration of Cr, Ni, Mo and N (on the weight basis) of the base metal are defined as $\%Cr^P$, $\%Ni^P$, $\%HO^P$ and $\%N^P$ and concentrations (on the weight basis) of Cr, Ni and Mo of the weld material are defined as $\%Cr^F$, $\%Ni^F$ and $\%Mo^F$.

2.  A method of welding a high nitrogen containing stainless steel as defined in claim 1, wherein the composition of alloy elements of the welding material comprises Cr 20 - 32%, Ni 5 - 25%, Mo 2 - 8%, C $\leq$ 0.03%, Si $\leq$ 0.6%, Mn $\leq$ 2.5%, P $\leq$ 0.03%, S $\leq$ 0.03% and the balance being Fe in which other inevitable impurities may also be contained.

3.  A welding material (welding consumables) in the welding method as defined in claim 1 or 2.

Fig. 1

(a)

Cross sectional shape of groove before welding

(b)

Cross sectional shape of weld metal after welding

Shape of groove before welding

Cross sectional area of weld metal $S_{WM}$

Cross sectional area of base metal melted portion $S_{PM}$

Fig. 2

GTA welding process under supply of welding material

Fig. 3

(a) Shape of groove

(b) Weld bead cross section

Fig. 4

Fig. 5

Laser beam

1mm

4mm

Base metal

Welding consumables
(insert material)

Base metal

# Fig. 6

**(a)** Consumable electrode type arc welding process
(GMA welding process)

**(b)** Shape of groove

Fig. 7

Weld metal

Blow hole